# EUROPÄISCHE PATENTSCHRIFT

(11) **EP 2 386 464 B1**
(45) Veröffentlichungstag und Bekanntmachung des Hinweises auf die Patenterteilung: **14.06.2017**
(21) Anmeldenummer: 11002666.3
(22) Anmeldetag: 31.03.2011
(51) Int. Cl.: B62D 15/02, B60W 30/06

(54) **Verfahren zum Einparken oder Ausparken und zur Vermeidung einer Kollision eines Fahrzeugs sowie entsprechende Assistenzsysteme und Fahrzeug**
Method for parking or leaving a parking space and avoiding a vehicle collision and corresponding assistance system and vehicle
Procédé de stationnement ou de sortie de stationnement et pour éviter une collision d'un véhicule ainsi que système d'assistance et véhicule correspondant

(30) Priorität: 12.05.2010 DE 102010020203
(43) Veröffentlichungstag der Anmeldung: 16.11.2011
(73) Patentinhaber: Volkswagen Aktiengesellschaft, 38436 Wolfsburg (DE)
(72) Erfinder: Terkes, Mehmet, 38102 Braunschweig (DE); Brüning, Stefan, 10783 Berlin (DE); Wuttke, Ulrich, 38126 Braunschweig (DE); Hüger, Philipp, 38448 Wolfsburg (DE)

(56) Entgegenhaltungen:
- DE-A1-102005 017 359
- US-A1- 2004 257 556
- US-A1- 2009 243 912

## Beschreibung

Die vorliegende Erfindung betrifft zum einen ein Verfahren, um ein Fahrzeug mit Hilfe eines Assistenzsystems ein- oder auszuparken, und zum anderen ein Verfahren, um mit Hilfe eines Assistenzsystems eine Kollision eines Fahrzeugs zu vermeiden. Darüber hinaus betrifft die vorliegende Erfindung entsprechend ausgestaltete Assistenzsysteme und Fahrzeuge.

Die DE 10 2005 017 359 A1 beschreibt ein Assistenzsystem eines Fahrzeugs, bei welchem systemrelevante Funktionen überprüft werden, bevor ein Eingriff in die Lenkung des Fahrzeugs vorgenommen wird.

Während nach dem Stand der Technik (nur) Fehler in systemrelevanten Funktionen berücksichtigt werden, stellt sich die vorliegende Erfindung die Aufgabe, auch normale Betriebszustände des Fahrzeugs zu berücksichtigen, welche eine Funktionsweise eines Assistenzsystems, mit welchem ein Parkvorgang eines Fahrzeugs unterstützt oder eine Kollision des Fahrzeugs vermieden werden kann, beeinträchtigen.

Erfindungsgemäß wird diese Aufgabe durch ein Verfahren zur Vermeidung einer Kollision eines Fahrzeugs nach Anspruch 1, durch ein Assistenzsystem nach Anspruch 8 und durch ein Fahrzeug nach Anspruch 11 gelöst. Die abhängigen Ansprüche definieren bevorzugte und vorteilhafte Ausführungsformen der vorliegenden Erfindung.

Im Rahmen der vorliegenden Erfindung wird auch ein weiteres Verfahren zur Vermeidung einer Kollision eines Fahrzeugs mit Hilfe eines Assistenzsystems bereitgestellt. Ähnlich wie bei dem vorab beschriebenen erfindungsgemäßen Verfahren wird ein Verdeckungszustand des Fahrzeugs automatisch erfasst, wobei bei Vorliegen dieses Verdeckungszustands zumindest ein Abstandsmesssensor des Assistenzsystems von einem Teil des Fahrzeugs verdeckt wird. Wenn dieser Verdeckungszustand vorliegt, wird automatisch ein Hinweis auf den vorliegenden Verdeckungszustand erzeugt.

Durch diesen Hinweis, welcher optisch in Form einer Anzeige, akustisch durch Ausgabe einer bestimmten Tonfolge oder haptisch, z.B. durch Vibrieren des Lenkrads, erfolgen kann, wird der Fahrer des Fahrzeugs vorteilhafterweise darüber informiert, dass der Kollisionsschutz des Fahrzeugs beispielsweise aufgrund einer geöffneten Schiebetür nur noch eingeschränkt vorhanden ist. Der Fahrer kann darauf reagieren, indem er entweder die Schiebetür schließt oder aufgrund der Kenntnis dieser Einschränkung zumindest vorsichtiger fährt.

Gemäß einer erfindungsgemäßen Ausführungsform wird, wenn der Verdeckungszustand vorliegt, falls ein Lenkeingriff des Assistenzsystems in eine Lenkung des Fahrzeugs aktiv ist, dieser Lenkeingriff automatisch deaktiviert oder, falls der Lenkeingriff nicht aktiviert ist, eine Aktivierung des Lenkeingriffs automatisch verhindert.

Die vorliegende Erfindung verhindert gemäß dieser Ausführungsform, dass ein (semi-) automatischer Einpark- oder Ausparkvorgang durchgeführt wird, wenn ein oder mehrere Abstandssensoren beispielsweise durch eine Schiebetür des Fahrzeugs verdeckt sind. Mit anderen Worten kann ein (semi-) automatischer Einpark- oder Ausparkvorgang vorteilhafterweise nur dann durchgeführt werden, wenn alle Abstandsmesssensoren eine freie Sicht auf Hindernisse in der Umgebung des Fahrzeugs aufweisen, wodurch ein kollisionsfreier Einpark- oder Ausparkvorgang sichergestellt wird.

Insbesondere wird der Lenkeingriff des Assistenzsystems nur dann deaktiviert oder verhindert, wenn der verdeckte Abstandsmesssensor bei einer Längsparklücke auf derjenigen Seite des Fahrzeugs liegt, auf welcher auch die Längsparklücke vom Fahrzeug gesehen liegt.

Es ist allerdings erfindungsgemäß dennoch möglich, mit den nicht verdeckten Abstandsmessersensoren eine Vermessung einer Parklücke durchzuführen, auch wenn ein oder mehrere Abstandsmessersensoren verdeckt sind, der Verdeckungszustand also vorliegt.

Da die Vermessung einer Parklücke auch nur mit einem Teil der Abstandsmesssensoren durchgeführt werden kann (beispielsweise kann die Parklücke mit vorderen Sensoren vermessen werden, während die hinteren Sensoren von einer Schiebetür verdeckt sind), ist es vorteilhaft die Vermessung einer Parklücke auch im Verdeckungszustand zu ermöglichen.

Wenn erfasst wird, dass der Verdeckungszustand des Fahrzeugs nicht mehr vorliegt, da beispielsweise die Schiebetür geschlossen wird, kann die im Verdeckungszustand ermittelte Information über eine Parklücke verwendet werden, um automatisch einen Einparkvorgang mittels des Assistenzsystems durchzuführen.

Mit anderen Worten muss die Parklücke nicht nochmals vermessen werden, wenn der Abstandsmesssensor, welcher im Verdeckungszustand von dem Fahrzeugteil (z.B. der Schiebetür) verdeckt wird, wieder freigegeben wird.

Mit anderen Worten führt der Verdeckungszustand bei einem Einparkvorgang erst dann zu Beeinflussung des Einparkvorgangs, wenn der Lenkeingriff gegeben ist (da dieser im Verdeckungszustand deaktiviert wird) oder wenn eine so genannte Position OK (Position des Fahrzeugs, von welcher mit Rückwärtsfahrt in die Parklücke eingeparkt wird) erreicht ist, da im Verdeckungszustand die Aktivierung des Assistenzsystems zum (semi-) automatischen Einparken nicht angeboten wird.

Wird der Lenkeingriff des Assistenzsystems während eines Parkvorgangs automatisch deaktiviert, da der Verdeckungszustand erfasst wird, kann dieser Parkvorgang unter bestimmten Bedingungen fortgesetzt werden, falls der Verdeckungszustand des Fahrzeugs nicht mehr vorliegt (z.B. da die Schiebetür wieder geschlossen wird) und das Assistenzsystem zur Fortsetzung des Parkvorgangs manuell aktiviert wird.

Wird beispielsweise die Schiebetür während eines automatischen Parkvorgangs geöffnet, wird der Lenkeingriff des Assistenzsystems deaktiviert und damit der Parkvorgang unterbrochen, wie es vorab beschrieben ist. Erkennt dies beispielsweise der Fahrer und schließt daraufhin die Schiebetür, kann der Parkvorgang vorteilhafterweise fortgesetzt werden, sofern das Assistenzsystem (vom Fahrer) manuell aktiviert wird.

Eine Wiederaufnahme des Parkvorgangs ist allerdings beim Einparken nur möglich, wenn sich das erfindungsgemäße Verfahren in einem ersten Rangierzug des Einparkvorgangs befindet.

Der Flankenschutz oder Kollisionsschutz wird insbesondere für denjenigen Randbereich, welcher von dem verdeckten Abstandsmesssensor überwacht wird, abgeschaltet (d.h. stumm geschaltet). Dabei wird auch die Funktion des verdeckten Abstandsmesssensors bezüglich einer Erkennung neuer oder einer Aktualisierung bereits erfasster Objekte deaktiviert.

Dabei umfasst der Hinweis insbesondere eine Information, welche den Fahrer darüber informiert, welcher Randbereich des Fahrzeugs aufgrund des verdeckten Abstandsmesssensors nur noch eingeschränkt überwacht wird.

Im Rahmen der vorliegenden Erfindung wird ein Assistenzsystem für ein Fahrzeug bereitgestellt. Das Assistenzsystem umfasst eine Vorrichtung zur Erzeugung eines Hinweises, eine Steuerung, mehrere Abstandsmesssensoren (z.B. Ultraschallsensoren), um eine Umgebung des Fahrzeugs zu vermessen, und einen Zustandserfassungssensor. Das erfindungsgemäße Assistenzsystem erfasst mit Hilfe des Zustandserfassungssensors den Verdeckungszustand des Fahrzeugs, welcher dann vorliegt, wenn einer oder mehrere der Abstandsmesssensoren von einem Teil des Fahrzeugs verdeckt sind. Die Steuerung erzeugt mit Hilfe der Vorrichtung den Hinweis auf den Verdeckungszustand, wenn die Steuerung mit Hilfe des Zustandserfassungssensors den Verdeckungszustand erfasst.

Gemäß einer erfindungsgemäßen Ausführungsform des Assistenzsystems deaktiviert die Steuerung einen Lenkeingriff des Assistenzsystems in eine Lenkung des Fahrzeugs, falls der Lenkeingriff aktiv ist, oder verhindert eine Aktivierung dieses Lenkeingriffs, falls der Lenkeingriff nicht aktiviert ist, wenn die Steuerung mit Hilfe des Zustandserfassungssensors den Verdeckungszustand erfasst.

Die Vorteile des erfindungsgemäßen Assistenzsystems entsprechen im Wesentlichen den Vorteilen des erfindungsgemäßen Verfahrens, welche vorab im Detail ausgeführt sind, so dass hier auf eine Wiederholung verzichtet wird.

Als Abstandsmesssensor kann dabei neben einem Ultraschallsensor ein optischer Sensor, ein Infrarot-Sensor, oder auch eine Kamera eingesetzt werden. Auch eine Kombination von Sensoren verschiedener Typen ist denkbar.

Schließlich wird im Rahmen der vorliegenden Erfindung ein Fahrzeug bereitgestellt, welches das erfindungsgemäße Assistenzsystem umfasst.

Die vorliegende Erfindung ist insbesondere für ein mit einem Assistenzsystem ausgestaltetes Fahrzeug geeignet, bei welchem ein durchaus üblicher Betriebszustand des Fahrzeugs zu einer Einschränkung der Funktionsweise des Assistenzsystems führt. Selbstverständlich ist die vorliegende Erfindung nicht auf diesen bevorzugten Anwendungsbereich eingeschränkt, da die vorliegende Erfindung auch bei Flugzeugen, Schiffen und gleisgebundenen oder spurgeführten Fahrzeugen eingesetzt werden kann.

Im Folgenden wird die vorliegende Erfindung anhand bevorzugter Ausführungsformen mit Bezug zu den Figuren im Detail erläutert.
- In Fig. 1: ist ein Einparkvorgang gemäß der vorliegenden Erfindung dargestellt.
- Fig. 2: stellt schematisch ein erfindungsgemäßes Fahrzeug mit einem erfindungsgemäßen Assistenzsystem dar.

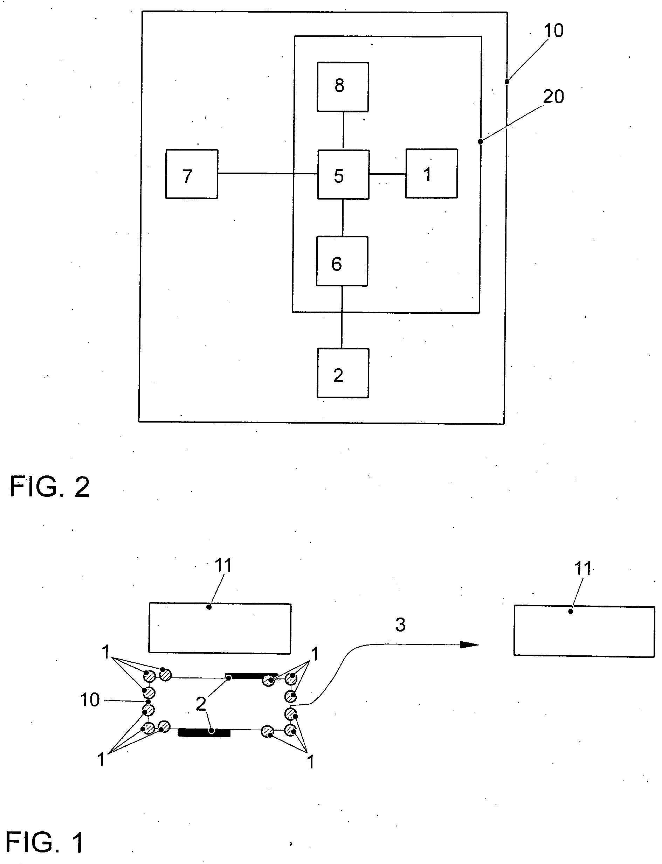

In Fig. 1 ist ein erfindungsgemäßes Fahrzeug 10 bei einem Einparkvorgang dargestellt. Das Fahrzeug 10 umfasst mehrere Ultraschallsensoren 1 und auf jeder Seite jeweils eine Schiebetür 2. Da die rechte Schiebetür 2 geöffnet ist, verdeckt diese Schiebetür 2 den hinteren Ultraschallsensor 1 auf der rechten Seite des Fahrzeugs 10, weshalb ein so genannter Verdeckungszustand des Fahrzeugs 10 vorliegt. Auch wenn dieser Ultraschallsensor 1 verdeckt ist, kann eine Parklücke 3, welche sich zwischen den beiden parkenden Fahrzeugen 11 auf der rechten Seite des Fahrzeugs 10 befindet, bei einer Vorbeifahrt des Fahrzeugs 10 von den restlichen Ultraschallsensoren 1, insbesondere von dem vorderen Ultraschallsensor 1 auf der rechten Seite vermessen werden.

Aufgrund des von der geöffneten Schiebetür 2 verdeckten Ultraschallsensors 1 kann der Einparkvorgang nicht (semi-) automatisch durchgeführt werden. Dagegen wäre ein (semi-) automatisch durchgeführter Einparkvorgang bei einer Parklücke auf der linken Seite des Fahrzeugs 10 möglich, da auf dieser linken Seite keiner der Ultraschallsensoren 1 von der Schiebetür 2 verdeckt wird.

Wenn die Schiebetür 2 auf der rechten Seite des Fahrzeugs 10 geschlossen wird, kann der Einparkvorgang in die auf der rechten Seite liegende Parklücke nach einer manuellen Betätigung eines Bedienelements eines Assistenzsystems des Fahrzeugs 10 (semi-) automatisch durchgeführt werden, wobei Informationen aus der Vorbeifahrt an der Parklücke 3 mit der geöffneten Schiebetür 2 verwendet werden. Mit anderen Worten ist keine erneute Vorbeifahrt an der Parklücke 3 mit geschlossener Schiebetür 2 zur Vermessung der Parklücke 3 erforderlich.

Wird die Schiebetür 2 auf der rechten Seite während des (semi-) automatischen Einparkvorgang geöffnet, wobei der Ultraschallsensoren 1 auf der hinteren rechten Seite des Fahrzeugs 10 verdeckt wird, wird der Lenkeingriff des Assistenzsystems in die Lenkung des Fahrzeugs 10 deaktiviert, wodurch der (semi-) automatische Einparkvorgang quasi unterbrochen wird. Diese Unterbrechung oder Deaktivierung kann durch eine entsprechende Meldung auf dem Bordcomputer des Fahrzeugs 10 angezeigt werden. Wird die Schiebetür 2 anschließend wieder geschlossen, kann wiederum nach der manuellen Betätigung des Bedienelements des Assistenzsystems der (semi-) automatische Einparkvorgang fortgesetzt werden. Diese Fortsetzung oder Wiederaufnahme ist allerdings nur dann möglich, wenn sich das Fahrzeug 10 in einem ersten Rangierzug des Einparkvorgangs befindet, d.h. es fand noch kein Gangwechsel vom Rückwärtsgang in den Vorwärtsgang des Fahrzeugs 10 statt.

Wenn bei geöffneter Schiebetür 2 auf der rechten Seite des Fahrzeugs 10 und damit bei deaktiviertem Lenkeingriff des Assistenzsystems der Gang gewechselt wird (d.h. vom Rückwärtsgang in den Vorwärtsgang), bevor die Schiebetür 2 wieder geschlossen wird, kann der (semi-) automatische Einparkvorgang nicht fortgesetzt werden. In dieser Situation kann mit dem Assistenzsystem nur ein (semi-) automatischer Ausparkvorgang durchgeführt werden.

Wenn eine der beiden Schiebetüren 2 geöffnet ist, wodurch der entsprechende Ultraschallsensor 1 verdeckt wird, wird dies über eine Anzeige des Fahrzeugs 10 dargestellt. Auf dieser Anzeige wird dann der entsprechende Randbereich des Fahrzeugs 10 nicht dargestellt, bei welchem der entsprechende Ultraschallsensor 1 durch die geöffnete Schiebetür 2 verdeckt wird. Sobald die entsprechende Schiebetür 2 wieder geschlossen wird, ist auf der Anzeige wieder der komplette Randbereich des Fahrzeugs 10 (d.h. beide Seiten) dargestellt, wodurch dem Fahrer des Fahrzeugs 10 angezeigt wird, dass der Kollisionsschutz oder Flankenschutz des Fahrzeugs 10 auf keiner Seite durch einen verdeckten Ultraschallsensor 1 beeinträchtigt ist. Sobald die vorher geöffnete Schiebetür 2 wieder geschlossen ist, nimmt der Flankenschutz seine Arbeit für den Randbereich des vorher verdeckten Ultraschallsensors 1 mit den vor der Öffnung der Schiebetür 2 gespeicherten Werten wieder auf.

In Fig. 2 ist schematisch ein erfindungsgemäßes Fahrzeug 10 dargestellt, welches ein erfindungsgemäßes Assistenzsystem 20, eine Lenkung 7 und eine Schiebetür 2 umfasst. Dabei umfasst das Assistenzsystem 20 seinerseits eine Steuerung 5, einen (genauer mehrere) Ultraschallsensoren 1, einen Sensor 6 und einen Bordcomputer 8. Über den Sensor 6 erfasst die Steuerung 5, ob die Schiebetür 2 geöffnet ist und dabei einen der Ultraschallsensoren 1 verdeckt. Die Steuerung 5 aktiviert oder deaktiviert einen Lenkeingriff des Assistenzsystems 20 in die Lenkung 7 des Fahrzeugs 10 abhängig davon, ob der Sensor 6 einen von der Schiebetür 2 verdeckten Ultraschallsensor 1 signalisiert oder nicht. Darüber hinaus wird ein von der Schiebetür 2 verdeckter Ultraschallsensor 1 über den Bordcomputer 8 angezeigt.

## Patentansprüche

1. Verfahren zur Vermeidung einer Kollision eines Fahrzeugs (10) unter Verwendung eines Assistenzsystems (20),
**dadurch gekennzeichnet,**
**dass** ein Verdeckungszustand des Fahrzeugs (10), in welchem ein Abstandsmesssensor (1) des Assistenzsystems (20) von einem Teil (2) des Fahrzeugs (10) verdeckt wird, automatisch erfasst wird, und
**dass**, wenn der Verdeckungszustand vorliegt, automatisch ein Hinweis auf den Verdeckungszustand erzeugt wird.

2. Verfahren nach Anspruch 1, **dadurch gekennzeichnet, dass**, wenn der Verdeckungszustand vorliegt, ein Lenkeingriff des Assistenzsystems (20) in eine Lenkung (7) des Fahrzeugs(10) automatisch deaktiviert wird oder verhindert wird.

3. Verfahren nach Anspruch 2, **dadurch gekennzeichnet, dass** mit Hilfe mindestens eines weiteren Abstandsmesssensors (1) automatisch eine Vermessung einer Parklücke (3) im Rahmen eines Einparkvorgangs des Assistenzsystems (20) durchgeführt wird, auch wenn der Verdeckungszustand des Fahrzeugs (10) vorliegt.

4. Verfahren nach Anspruch 2 oder 3, **dadurch gekennzeichnet, dass**, wenn automatisch erfasst wird, dass der Verdeckungszustand des Fahrzeugs (10) nicht mehr vorliegt, ein automatischer Einparkvorgang mit Hilfe des Assistenzsystems (20) unter Berücksichtigung einer Information über eine Parklücke (3) durchgeführt wird, welche erfasst wurde, als sich das Fahrzeug (10) in dem Verdeckungszustand befand.

5. Verfahren nach einem der Ansprüche 2-4, **dadurch gekennzeichnet, dass** nach einer automatischen Deaktivierung des Lenkeingriffs während eines Einparkvorgangs oder eines Ausparkvorgangs des Assistenzsystems (20) aufgrund des Erfassens des Verdeckungszustands der Lenkeingriff abhängig von einer manuellen Betätigung wieder aktiviert wird, um den Einparkvorgang oder den Ausparkvorgang fortzusetzen, falls automatisch erfasst wird, dass der Verdeckungszustand des Fahrzeugs (10) nicht mehr vorliegt.

6. Verfahren nach Anspruch 5, **dadurch gekennzeichnet, dass** der Lenkeingriff nur dann wieder aktiviert wird, wenn sich das Verfahren in einem ersten Rangierzug des Einparkvorgangs befindet.

7. Verfahren nach einem der vorhergehenden Ansprüche, **dadurch gekennzeichnet, dass** der Hinweis eine Information umfasst, für welchen Randbereich des Fahrzeugs (10) eine Kollision nur eingeschränkt vermieden werden kann, da der Abstandsmesssensor (1) verdeckt wird.

8. Assistenzsystem für ein Fahrzeug (10),
wobei das Assistenzsystem (20) eine Vorrichtung (8) zur Erzeugung eines Hinweises, eine Steuerung (5), mehrere Abstandsmesssensoren (1) und mindestens einen Zustandserfassungssensor (6) umfasst,
**dadurch gekennzeichnet,**
**dass** der mindestens eine Zustandserfassungssensor (6) zur Erfassung eines Verdeckungszustands des Fahrzeugs (10) ausgestaltet ist, in welchem einer der Abstandsmesssensoren (1) von einem Teil (2) des Fahrzeugs (10) verdeckt ist, und dass die Steuerung (5) derart ausgestaltet ist, dass sie mittels der Vorrichtung (8) den Hinweis auf den Verdeckungszustand erzeugt, wenn die Steuerung (5) mittels des mindestens einen Zustandserfassungssensors (6) den Verdeckungszustand erfasst.

9. Assistenzsystem nach Anspruch 8, **dadurch gekennzeichnet, dass** die Steuerung (5) derart ausgestaltet ist, dass sie einen Lenkeingriff des Assistenzsystems (20) in eine Lenkung (7) des Fahrzeugs (10), falls der Lenkeingriff aktiv ist, deaktiviert oder, falls der Lenkeingriff nicht aktiv ist, nicht aktiviert, wenn die Steuerung (5) mittels des mindestens einen Zustandserfassungssensors (6) den Verdeckungszustand erfasst.

10. Assistenzsystem nach Anspruch 8 oder 9, **dadurch gekennzeichnet, dass** das Assistenzsystem (20) zur Durchführung des Verfahrens nach einem der Ansprüche 1-7 ausgestaltet ist.

11. Fahrzeug mit einem Assistenzsystem (20) nach einem der Ansprüche 8-10.

## Claims

1. Method for avoiding a collision of a vehicle (10) using an assistance system (20),
**characterized**
**in that** an obscured state of the vehicle (10), in which a distance measuring sensor (1) of the assistance system (20) is obscured by a part (2) of the vehicle (10), is automatically detected, and
**in that** a notification of the obscured state is automatically generated if the obscured state is present.

2. Method according to Claim 1, **characterized in that** a steering intervention of the assistance system (20) into a steering system (7) of the vehicle (10) is automatically deactivated or prevented if the obscured state is present.

3. Method according to Claim 2, **characterized in that** a measurement of a parking bay (3) during the course of a parking process of the assistance system (20) is automatically carried out by means of at least one further distance measuring sensor (1) even when the obscured state of the vehicle (10) is present.

4. Method according to Claim 2 or 3, **characterized in that**, if it is automatically detected that the obscured state of the vehicle (10) is no longer present, an automatic parking process is carried out by means of the assistance system (20) taking into consideration an item of information regarding a parking bay (3) detected when the vehicle (10) was in the obscured state.

5. Method according to one of Claims 2-4, **characterized in that**, after an automatic deactivation of the steering intervention during a parking process or a parking-bay-exiting process of the assistance system (20) on account of the detection of the obscured state, the steering intervention is reactivated as a function of a manual actuation in order to continue the parking process or the parking-bay-exiting process if it is automatically detected that the obscured state of the vehicle (10) is no longer present.

6. Method according to Claim 5, **characterized in that** the steering intervention is reactivated only if the method is in a first maneuvering step of the parking process.

7. Method according to one of the preceding claims, **characterized in that** the notification comprises an item of information regarding that edge region of the vehicle (10) for which a collision can be avoided only to a restricted extent because the distance measuring sensor (1) is obscured.

8. Assistance system for a vehicle (10),
the assistance system (20) comprising a device (8) for generating a notification, a controller (5), a plurality of distance measuring sensors (1) and at least one state detecting sensor (6),
**characterized**
**in that** the at least one state detecting sensor (6) is designed to detect an obscured state of the vehicle (10) in which one of the distance measuring sensors (1) is obscured by a part (2) of the vehicle (10), and
**in that** the controller (5) is designed to generate the notification of the obscured state by means of the device (8) if the controller (5) detects the obscured state by means of the at least one state detecting sensor (6).

9. Assistance system according to Claim 8,
**characterized in that**
the controller (5) is designed such that, if the controller detects the obscured state by means of the at least one state detecting sensor (6), said controller deactivates a steering intervention of the assistance system (20) into a steering system (7) of the vehicle (10) if the steering intervention is active, or does not activate said steering intervention if the steering intervention is not active.

10. Assistance system according to Claim 8 or 9, **characterized in that** the assistance system (20) is designed to carry out the method according to one of Claims 1-7.

11. Vehicle having an assistance system (20) according to one of Claims 8-10.

## Revendications

1. Procédé d'évitement d'une collision d'un véhicule (10) par recours à un système d'assistance (20), **caractérisé en ce que**
un état de masquage du véhicule (10) dans lequel un capteur (1) de mesure de distance de système d'assistance (20) est masqué par une partie (2) du véhicule (10) est saisi automatiquement et
**en ce que** lorsque l'état de masquage prévaut, une indication concernant l'état de masquage est automatiquement formée.

2. Procédé selon la revendication 1, **caractérisé en ce que** lorsque l'état de masquage prévaut, une intervention du système d'assistance (20) sur la direction (7) du véhicule (10) est désactivée ou empêchée automatiquement.

3. Procédé selon la revendication 2, **caractérisé en ce que** même lorsque l'état de masquage du véhicule (10) prévaut, une mesure automatique d'un emplacement de stationnement (3) est réalisée lors d'une manoeuvre de stationnement du système d'assistance (20) à l'aide d'au moins un autre capteur (1) de mesure de distance.

4. Procédé selon les revendications 2 ou 3, **caractérisé en ce que** lorsqu'il est détecté automatiquement que l'état de masquage du véhicule (10) ne prévaut plus, une manoeuvre automatique de stationnement est réalisée à l'aide du système d'assistance (20) en tenant compte d'une information concernant l'emplacement de stationnement (3) qui a été saisie lorsque le véhicule (10) se trouvait dans l'état de masquage.

5. Procédé selon l'une des revendications 2 à 4, **caractérisé en ce qu'**après une désactivation automatique de l'intervention du système d'assistance (20) sur le volant pendant une manoeuvre de stationnement ou une manoeuvre de sortie de stationnement sur la base de la détection de l'état de masquage, l'intervention sur le volant est de nouveau activée suite à un actionnement manuel en vue de poursuivre la manoeuvre de stationnement ou la manoeuvre de sortie de stationnement au cas où il est détecté automatiquement que l'état de masquage du véhicule (10) ne prévaut plus.

6. Procédé selon la revendication 5, **caractérisé en ce que** l'intervention sur le volant n'est réactivée que lorsque le procédé se trouve dans un premier segment de la manoeuvre de stationnement.

7. Procédé selon l'une des revendications précédentes, **caractérisé en ce que** l'indication comporte une information concernant le bord du véhicule (10) pour lequel une collision ne peut être évitée que de manière limitée parce que le capteur (1) de mesure de distance est masqué.

8. Système d'assistance pour un véhicule (10), le système d'assistance (20) comportant
un ensemble (8) qui forme une indication,
une commande (5),
plusieurs capteurs (1) de mesure de distance et
au moins un capteur (6) de détection d'état, **caractérisé en ce que**
le ou les capteurs (6) de détection d'état sont configurés pour détecter un état de masquage du véhicule (10) dans lequel un des capteurs (1) de mesure de distance est masqué par une partie (2) du véhicule (10) et **en ce que** la commande (5) est configurée de telle sorte qu'à l'aide de l'ensemble (8), elle forme l'indication concernant l'état de masquage si la commande (5) détecte l'état de masquage au moyen du ou des capteurs (6) de détection d'état.

9. Système d'assistance selon la revendication 8, **caractérisé en ce qu'**au cas où l'intervention sur la direction est active, la commande (5) est configurée de telle sorte qu'elle désactive une intervention du système d'assistance (20) sur la direction (7) du véhicule (10) ou au cas où l'intervention sur la direction n'est pas active, ne l'active pas si la commande (5) a saisi un état de masquage au moyen du ou des capteurs (6) de détection d'état.

10. Système d'assistance selon les revendications 8 ou 9, **caractérisé en ce que** le système d'assistance (20) est configuré pour mettre en oeuvre le procédé selon l'une des revendications 1 à 7.

11. Véhicule doté d'un système d'assistance (20) selon l'une des revendications 8 à 10.
